# EUROPÄISCHE PATENTSCHRIFT

(11) **EP 1 771 993 B1**
(45) Veröffentlichungstag und Bekanntmachung des Hinweises auf die Patenterteilung: **29.02.2012**
(21) Anmeldenummer: 05766815.4
(22) Anmeldetag: 22.06.2005
(51) Int. Cl.: H04L 29/06

(54) **VERFAHREN ZUR ÜBERWACHUNG EINES NACHRICHTENVERKEHRS, SOWIE EINE ERSTE UND ZWEITE NETZWERKEINHEIT ZU DESSEN DURCHFÜHRUNG**
METHOD FOR MONITORING MESSAGE TRAFFIC, AND A FIRST AND SECOND NETWORK UNIT FOR THE EXECUTION THEREOF
PROCEDE POUR SURVEILLER UN ECHANGE DE MESSAGES, AINSI QU'UNE PREMIERE ET QU'UNE SECONDE UNITE DE RESEAU POUR METTRE LEDIT PROCEDE EN OEUVRE

(30) Priorität: 29.07.2004 DE 102004036732
(43) Veröffentlichungstag der Anmeldung: 11.04.2007
(73) Patentinhaber: SIEMENS AKTIENGESELLSCHAFT, 80333 München (DE)
(72) Erfinder: BECKMANN, Mark, 38124 Braunschweig (DE); SCHMIDT, Holger, 38102 Braunschweig (DE)
(86) Internationale Anmeldenummer: PCT/EP2005/052914
(87) Internationale Veröffentlichungsnummer: WO 2006/013133

(56) Entgegenhaltungen:
- EP-A- 1 317 108
- WO-A-02/37870
- US-A1- 2004 059 913
- US-A1- 2004 131 042

## Beschreibung

Das Session Initiation Protocol (SIP - Session Initiation Protocol) ist ein Kontrollprotokoll für Applikationsschichten, d.h. ein Signalisierungsprotokoll zum Aufbau, zur Modifikation und zum Abbau von Multimediasitzungen (Multimedia Sessions). SIP ist bekannt aus "SIP: Session Initiation Protocol", RFC 3261, June 2002, http://www.ietf.org. Unter diesen Multimediasitzungen werden beispielsweise Multimedia-Konferenzen, Internet-Telefonverbindungen (Voice Over IP) und ähnliche Applikationen verstanden. Mittels SIP können Teilnehmer zu Multimedia-Sitzungen eingeladen, als auch zu bereits aktiven Multimedia-Sitzungen hinzugefügt werden. SIP verfügt unter anderem über die Fähigkeit, einen Teilnehmer und somit ein bestimmtes Endgerät zu lokalisieren, eine Adresse dem Endgerät zuzuordnen als auch Verbindungen umzuleiten.

SIP wurde von 3GPP (3GPP - Third Generation Partnership Project) als Signalisierungsprotokoll für das IP Multimedia-Subsystem ausgewählt (IMS - IP Multimedia Subsystem, IP - Internet Protocol). Somit wird mit Hilfe des IMS eine Erweiterung des UMTS-Kernnetzwerks (UMTS - Universal Mobile Telecommunications System) zur Realisierung von IP-basierten Diensten zur Verfügung gestellt.

Die Druckschriften IETF RFC 3313, "Private Session Initiation (SIP), Extension for Media Authorization", Januar 2003, 3GPP TS 24.229 "IP Multimedia Call Control Protocol based on SIP and SDP, Stage 3" und 3GPP TS 23.203 "End-to-End Quality of Service Concept and Architecture" beschreiben ein Verfahren, mit dem sich Datenverbindungen autorisieren lassen, die für eine SIP-basierte Sitzung benötigt werden. Die Erfassung einer Datenmenge, die über diese Datenverbindung ausgetauscht wird, erfolgt im GPRS-Netzwerk (GPRS - General Packet Radio System). Dies erlaubt jedoch keine Erfassung und/oder Filterung der gesendeten Datennachrichten auf Applikationsebene.

Aus der US 2004/131042 A1 ist ein Verfahren zur Ausbildung einer Gruppenkommunikation bestehend aus einzelnen SIP-Endpoints bekannt. Ein die Gruppenkommunikation einrichtender Individual Proxy ist einem SIP-Nachrichtenaustausch eines Enpoints und eines Session Controllers zwischengeschaltet und beeinflusst den Nachrichtenaustausch. Die Beeinflussung dieses Proxies auf den Nachrichtenaustausch umfasst dabei eine Überschreibung von mit einem Paket per SDP-Protokoll gelieferten Nutzdaten sowie eine Anweisung, eine bestehende Sitzung zu beenden oder zu verschieben. Eine Überwachung ist indes nicht vorgesehen.

Die deutsche Patentanmeldung mit dem Aktenzeichen 10 2004 009 289.3 "Verfahren zur Steuerung und Auswertung eines Nachrichtenverkehrs einer Kommunikationseinheit durch eine erste Netzwerkeinheit innerhalb eines Mobilfunksystems sowie dazugehörige Kommunikationseinheit und erste Netzwerkeinheit" beschreibt ein Verfahren, mit dem eine oder mehrere Nachrichten des Nachrichtenverkehrs einer Kommunikationseinheit auf Grundlage einer oder mehrerer Nutzungsinformationen weitergeleitet, abgeblockt und/oder in einer Protokolldatei protokolliert wird.

Der Erfindung liegt die Aufgabe zugrunde, die Überwachung eines Nachrichtenverkehrs zwischen einer Kommunikationseinheit und einer ersten Netzwerkeinheit eines Mobilfunksystems in einfacher, effizienter und flexibler Weise bereitzustellen. Diese Aufgabe wird durch folgendes erfindungsgemäße Verfahren gelöst.

Bei einem Verfahren zur Überwachung eines Nachrichtenverkehrs zwischen einer Kommunikationseinheit und einer ersten Netzwerkeinheit eines Mobilfunksystems, wobei dieser Nachrichtenverkehr durch eine SIP-Steuernachricht ausgelöst wird, wird die SIP-Steuernachricht durch eine zweite Netzwerkeinheit anhand mindestens eines Analyseparameters ausgewertet und daraus ein Analyseergebnis erstellt, mit Hilfe des Analyseergebnisses eine Nutzungsinformation erzeugt und die Nutzungsinformation an die erste Netzwerkeinheit übermittelt, mit Hilfe der Nutzungsinformation von der ersten Netzwerkeinheit der Nachrichtenverkehr zwischen der Kommunikationseinheit und der ersten Netzwerkeinheit überwacht.

Durch das erfindungsgemäße Verfahren wird in vorteilhafter Weise der Nachrichtenverkehr einer Kommunikationseinheit überwacht. Die Nutzungsinformation, die die Vorgehensweise bei der Überwachung des Nachrichtenverkehrs angibt, kann individuell für jede Kommunikationseinheit angepasst werden.

Ferner wird die Nutzungsinformation in Abhängigkeit des Analyseergebnisses angepasst, wobei das Analyseergebnis von der Auswertung der SIP-Steuernachricht anhand mindestens eines Analyseparameters abhängt. Hiermit kann die Nutzungsinformation und somit die Überwachung des Nachrichtenverkehrs in Abhängigkeit von der SIP-Steuernachricht, die den Nachrichtenverkehr auslöst, adaptiert werden.

Die Erfindung betrifft weiterhin eine erste Netzwerkeinheit mit Mitteln zum Überwachen eines Nachrichtenverkehrs zwischen einer Kommunikationseinheit und der ersten Netzwerkeinheit eines Mobilfunksystems. Hiermit wird es ermöglicht, dass das erfindungsgemäße Verfahren in einer Netzwerkkomponente, wie bspw. einem GGSN (GGSN - Gateway-GPRS-Support-Node), realisierbar ist.

Des Weiteren betrifft die Erfindung eine zweite Netzwerkeinheit mit Mitteln zum Durchführen des erfindungsgemäßen Verfahrens. Hierdurch wird es ermöglicht, das erfindungsgemäße Verfahren bspw. in einem S-CSCF (S-CSCF - Serving-Call State Control Function Module) zu implementieren.

Sonstige Weiterbildungen der Erfindung sind in den Unteransprüchen wiedergegeben.

Die Erfindung, ihre Weiterbildungen und Vorteile werden nachfolgend anhand von Zeichnungen näher erläutert.

Es zeigen:
- Figur 1: ein Nachrichtenflussdiagramm, bei dem durch Registrierung einer Kommunikationseinheit in einer SIP-Session mindestens eine Nutzungsinformation erstellt, diese an die erste Netzwerkeinheit übermittelt und der durch die Registrierungsnachricht ausgelöste Nachrichtenverkehr überwacht wird;
- Figur 2: ein zweites Nachrichtenflussdiagramm, bei dem eine SIP-Steuernachricht an eine zweite Netzwerkeinheit geschickt, die mindestens eine Nutzungsinformation an die erste Netzwerkeinheit übermittelt, und bei dem der durch diese SIP-Steuernachricht ausgelöste Nachrichtenverkehr überwacht wird.

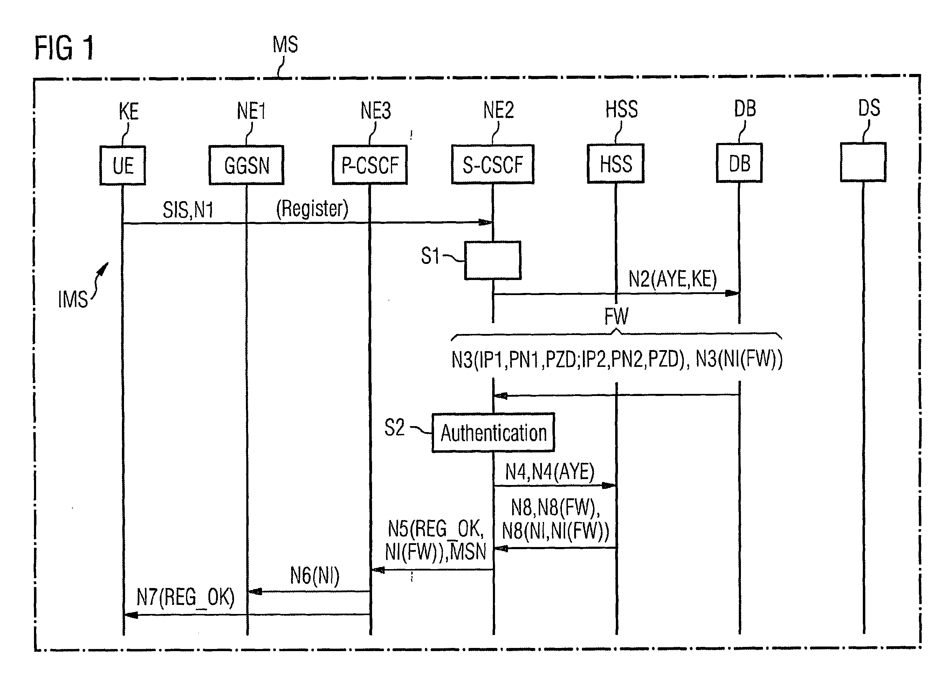

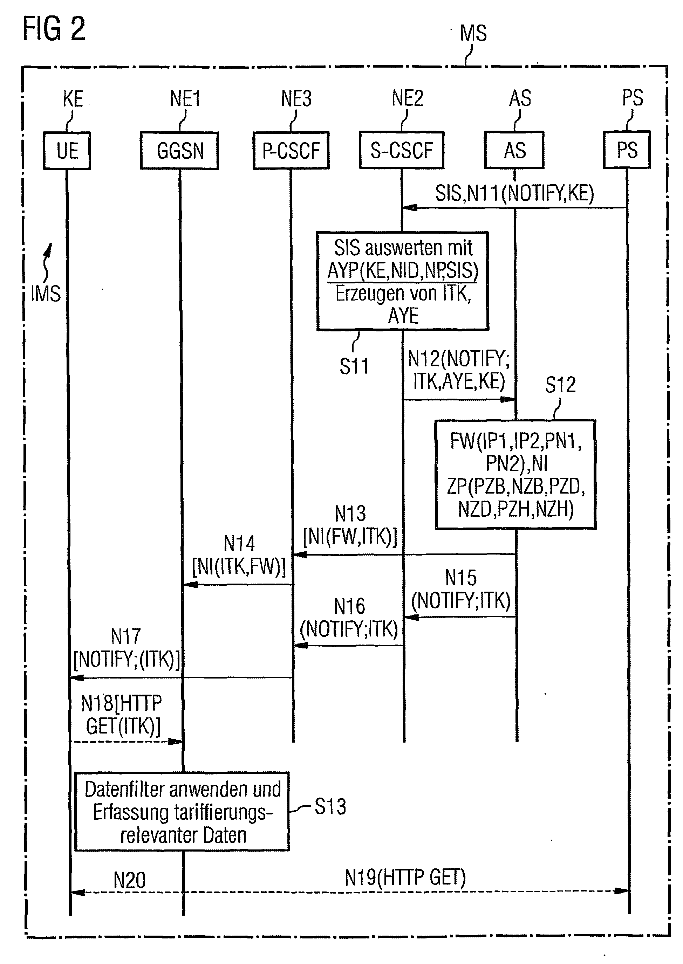

Elemente mit gleicher Funktions- und Wirkungsweise sind in den Figuren 1 und 2 mit denselben Bezugszeichen versehen.

Figur 1 zeigt in einem ersten Ausführungsbeispiel ein Nachrichtenflussdiagramm zur Durchführung des erfindungsgemäßen Verfahrens. Folgende Einheiten sind hierbei an der Durchführung des erfindungsgemäßen Verfahrens beteiligt:
- Eine Kommunikationseinheit KE, die Nachrichten, wie beispielsweise SIP-Steuernachrichten SIS, und/oder Datennachrichten, beispielsweise mit einem Datenserver DS austauscht. Diese Kommunikationseinheit KE ist z.B. ein Mobilfunkgerät nach GSM-Standard (GSM - Global Systems for Mobile) oder ein stationäres Gerät, das an ein IPbasiertes und/oder ISDN-basiertes Festnetz angeschlossen wird (IP- Internet Protocol; ISDN- Integrated Subscriber Digital Network). Unter Datennachrichten sind insbesondere Nachrichten zu verstehen, die multimediale Inhalte umfassen, z.B. Audio-, Video- und/oder Bildaten. Die Kommunikationseinheit (KE) wird bspw. als User Equipment (UE) realisiert.
- Eine erste Netzwerkeinheit NE1 zur Überwachung des Nachrichtenverkehrs von und zu der Kommunikationseinheit KE. Die erste Netzwerkeinheit NE1 kann in Form eines GGSN ausgebildet sein (GGSN - Gateway GPRS Support Node; GPRS - General Packet Radio System).
- Eine dritte Netzwerkeinheit NE3, die z.B. als P-CSCF (P-CSCF - Proxy Call State Control Function) realisiert ist.
- Eine zweite Netzwerkeinheit NE2, die z.B. als S-CSCF (S-CSCF - Serving Call State Control Function) ausgebildet ist.
- Eine Nutzerdatenbank HSS, die nutzerbezogene Informationen der Kommunikationseinheit KE beinhaltet. Diese Nutzerdatenbank HSS kann als 3GPP-HSS (3GPP - 3rd Generation Partnership Project; HSS - Home Subscriber Server) realisiert werden.
- Datenbank DB, die Informationen wie beispielsweise Filteranweisungen FW zur Verfügung stellt;
- Datenserver DS, der beispielsweise Audiodaten zum Downloaden für die Kommunikationseinheit KE1 bereitstellt.

Nach dem erfindungsgemäßen Verfahren überwacht die erste Netzwerkeinheit NE1 den Nachrichtenverkehrs von und zu der Kommunikationseinheit KE, wobei dieser Nachrichtenverkehr durch eine SIP-Steuernachricht SIS initiiert wird. Unter Überwachung ist im Folgenden die Filterung einzelner Nachrichten des Nachrichtenverkehrs zu verstehen, wobei Nachrichten entweder weitergeleitet oder nicht weitergeleitet werden und/oder Nachrichten bzw. Informationen zu Nachrichten, wie z.B. Datenvolumia der Nachrichten, protokolliert werden. Die Überwachung wird durch die erste Netzwerkeinheit NE1 durchgeführt. Hierzu erhält die erste Netzwerkeinheit NE1 mindestens eine Nutzungsinformation N1, die eine oder mehrere Vorschriften der Überwachung des Nachrichtenverkehrs vorgibt.

So sind in der Nutzungsinformation N1 zumindest eine der folgenden Filteranweisungen FW eingefügt:
- Mindestens eine erste IP-Adresse IP1 eines Absender:
   ein Absender einer Nachricht, wie z.B. die Kommunikationseinheit (KE) kann mehrere IP-Adressen aufweisen. Somit ist es notwendig eine dieser IP-Adressen, zu spezifizieren.
   Zum Beispiel zeigt die erste IP-Adresse IP1 = "139.172.15.29" nach dem Standard IP-Version 4 an.
- Mindestens eine erste Portnummer PN1 eines Absenders:
   zur Unterscheidung von Nachrichten, die zu einer speziellen Applikation des Absenders gehören, werden in der Praxis Portnummern eingesetzt. Um den Nachrichtenverkehr einer speziellen Applikation des Absenders zu filtern, ist es notwendig die erste Portnummer PN1 anzugeben. Oftmals wird neben der ersten Portnummer PN1 auch die erste IP-Adresse IP1 des Absenders zur eindeutigen Identifizierung einer speziellen Applikation des Absenders einer Nachricht, wie z.B. der Datenserver DS, angezeigt. Beispielsweise lautet die erste Portnummer PN1 = "80", wobei diese Portnummer gemäß dem Dokument RFC1700, "ASSIGNED NUMBERS", Oktober 1994, http://www.ietf.org, die Applikation HTTP anzeigt (HTTP - Hyper Text Tranfer Protocol).
- Mindestens eine zweite IP-Adresse IP2 einer Zieleinheit ZE:
   zur Adressierung einer Zieleinheit ZE einer Nachricht, wie z.B. einem Datenserver DS, ist es in der Praxis zweckmäßig eine IP-Adresse, wie z.B. die zweite IP-Adresse IP2, anzugeben. Diese zweite IP-Adrease IP2 identifiziert diese Zieleinheit ZE eindeutig, wie z.B. IP2 = "139.172.54.101".
- Mindestens eine zweite Portnummer PN2 der Zieleinheit ZE:
   zur Identifikation einer speziellen Applikation auf der Zieleinheit ZE wird in der Praxis eine Portnummer, wie z.B. die zweite Portnummer PN2, in einer Nachricht angezeigt. Bei Verwendung der zweiten IP-Adresse IP2 zusammen mit der zweiten Portnummer PN2 in einer Nachricht kann sowohl die Applikation als auch die Zieleinheit ZE eindeutig spezifiziert werden. Beispielsweise zeigt die zweite Port-nummer PN2 = "20" an.

Mit Hilfe von einer oder mehreren Filteranweisungen FW wird es der ersten Netzwerkeinheit NE1 ermöglicht, den Nachrichtenverkehr zwischen der Kommunikationseinheit KE und der ersten Netzwerkeinheit NE1 zu überwachen. Beispielsweise verwendet eine spezielle Videotelefonieapplikation zum Austausch von Daten die Portnummer 1500. Zum Aufbau eines derartigen Dienstes verbindet sich die Kommunikationseinheit KE mit einem Videoserver, der z.B. unter der IP-Adresse "150.150.15.5" erreichbar ist. Durch die Angabe der zweiten IP-Adresse IP2 = "150.150.15.5" und der zweiten Portnummer PN2 = 1500 ist die erste Netzwerkeinheit NE1 in der Lage den speziellen Nachrichtenverkehr dieser Videotelefonieapplikation von der Kommunikationseinheit KE zu dem Videoserver zu überwachen. In einem weiteren Beispiel wird der Kommunikationseinheit KE die IP-Adresse "95.94.93.92" zugewiesen. Die Nutzungsinformation NI umfasst bspw. eine Filteranweisung FW, die die erste IP-Adresse IP1 = "95.94.93.92" spezifiziert. Hiermit wird die erste Netzwerkeinheit NE1 in die Lage versetzt den vollständigen Nachrichtenverkehr, d.h. alle Nachrichten, von Kommunikationseinheit KE, die diese erste IP-Adresse IP1 als Absendeadresse umfassen, zu filtern. In einer weiteren und/oder zusätzlichen Variante werden alle Nachrichten und/oder Informationen zu Nachrichten, die diese erste IP-Adresse IP1 enthalten, in einer Protokolleinheit protokolliert.

Zusätzlich können mit Hilfe von Zugriffsparametern ZP die Verwendung einer oder mehrerer Filteranweisungen FW näher spezifiziert werden. Im Einzelnen sind dies:
- Positive Zugriffsberechtigung PZB:
   dieser Zugriffsparameter gibt an, dass auf die dazugehörige Filteranweisung FW, beispielsweise auf eine spezifizierte zweite IP-Adresse IP2, zugegriffen werden darf.
   Somit wird eine Nachricht die die positive Zugriffsberechtigung PZB zusammen mit der zweiten IP-Adresse IP2 umfasst weitergeleitet.
- Negative Zugriffsberechtigung NZB:
   dieser Zugriffsparameter spezifiziert, dass auf die dazugehörige Filteranweisung FW, wie beispielsweise die zweite Portnummer PN2, nicht zugegriffen werden darf, d.h. eine Nachricht, auf die das Kriterium der Filteranweisung FW mit dieser negativen Zugriffsberechtigung NZB zutrifft, wird nicht weitergeleitet.
- Positive Zugriffsdauer PZD:
   die positive Zugriffsdauer PZD gibt denjenigen Zeitraum an, innerhalb dem Nachrichten, auf die die entsprechende Filteranweisung FW mit der positiven Zugriffsdauern PZD zutreffen, geschickt werden dürfen, wie bspw. von der Kommunikationseinheit KE. Beispielsweise zeigt die Filteranweisung FW die zweite IP-Adresse IP2 = "139.172.15.101" und die positive Zugriffzeitdauer PZD = "4 Minuten" an.
   Hiermit werden Nachrichten mit der zweite IP-Adresse IP2 für eine Zeitdauer von 4 Minuten weitergeleitet. Nach 4 Minuten werden diese Nachrichten nicht weitervermittelt.
- Negative Zugriffszeitdauer NZD:
   die negative Zugriffszeitdauer NZD spezifiziert denjenigen Zeitraum, innerhalb dem auf eine Nachricht, die die entsprechende Filteranweisung FW umfasst, nicht weitergeleitet werden darf. Bspw. zeigt IP2="139.1.1.5" NZD="2 Tage" an, dass Nachrichten, die diese zweite IP-Adresse umfassen, abgeblockt werden. Nach 2 Tagen wird die Blockade aufgehoben und Nachrichten mit der zweiten IP-Adresse werden wieder weitervermittelt.
- Positive Zugriffshäufigkeit PZH:
   die positive Zugriffshäufigkeit PZH definiert, welche Anzahl an Nachrichten, die auf die entsprechende Filteranweisung FW zutreffen, weitergeleitet werden dürfen. Nachdem diese Anzahl erreicht ist, wird jede weitere Nachricht, auf die diese Filteranweisung passt, geblockt.
   Bspw. dürfen maximal fünf Nachrichten weitergeleitet werden.
- Negative Zugriffshäufigkeit NZH:
   die negative Zugriffshäufigkeit NZH definiert, welche Anzahl an Nachrichten, die auf die entsprechende Filteranweisung FW zutreffen, geblockt werden müssen. Nachdem diese Anzahl erreicht ist, wird jede weitere Nachricht, auf die diese Filteranweisung passt, weitervermittelt.

Durch Kombinationen von einer oder mehreren Filteranweisungen FW zusammen mit einem oder mehreren Zugriffsparametern ZP kann die Überwachung des Nachrichtenverkehrs zwischen der Kommunikationseinheit KE und der ersten Netzwerkeinheit NE1 mehr oder weniger detailliert spezifiziert werden. Die gemeinsame Verwendung von positiven und negativen Zugriffsparametern derselben Kategorie, wie z.B. die positive Zugriffsberechtigung PZB und die negative Zugriffsberechtigung NZ3 ergibt keine sinnvolle Filteranweisung. Daher kann innerhalb einer derartigen Kategorie jeweils nur ein Zugriffsparameter ZP angegeben werden, beispielsweise entweder die positive oder die negative Zugriffshäufigkeit PZH bzw. NZH.

Es ist vorteilhaft, die Filteranweisung FW und/oder den Zugriffsparameter ZP unter Zuhilfenahme einer XML-Syntax zu erstellen (XML - Extensible Mark Up Language). Somit kann eine standardisierte Darstellung der Filteranweisung FW und/oder des Zugriffsparameters ZP erreicht werden. Falls es nicht explizit angegeben wird, ist unter einer Filteranweisung FW im Folgenden auch eine Kombination aus Filteranweisung FW und Zugriffsparameter ZP zu verstehen.

Bei der Protokollierung des Nachrichtenverkehrs, also von Nachrichten und/oder Informationen von Nachrichten können folgende Parameter von besonderem Interesse sein:
- Gesamtdatenvolumen, wie z.B. aller übertragenen Nachrichten des Nachrichtenverkehrs oder pro IP-Adresse und/oder Portnummer;
- Datenvolumen in Abhängigkeit von einer oder mehreren spezifischen Filteranweisungen FW;
- Übertragungsstatistik der übertragenen Nachrichten, wie z.B. Anzahl der Nachrichten pro Zeiteinheit;
- Anzahl der Nachrichten pro IP-Adresse und/oder Portnummer, wie z.B. pro zweiter IP-Adresse IP2 und zweiter Portnummer PN2.

Ferner können zusätzliche Parameter, wie z.B. eine Uhrzeit und/oder Datum und/oder eine Nutzeridentität NID, in einer Protokolldatei durch die erste Netzwerkeinheit NE1 protokolliert werden, damit eine spätere Auswertung, z.B. ein übermitteltes Datenvolumen pro Nutzeridentität NID, ermöglicht wird.

Im Folgenden wird anhand des beispielhaften Nachrichtenflussdiagramms gemäß Figur 1 das erfindungsgemäße Verfahren näher erläutert. Hierbei wird das dynamische Erstellen und Anpassen der Filteranweisungen FW und/oder der Zugriffsparameter ZP erläutert. Die Kommunikationseinheit KE übermittelt eine erste Nachricht N1 an die zweite Netzwerkeinheit NE2. Im vorliegenden Ausführungsbeispiel handelt es sich bei dieser SIP-Steuernachricht um eine Registrierungsnachricht. Die SIP-Steuernachrichten SIS ermöglichen den Aufbau, die Modifikation und den Abbau von Multimediasitzungen. In dem Standarddokument 3GPP TS 26.229 "IP Multimedia Call Control Protocol based on SIP and SDP, Stage 3" als auch in 3GPP TS 24.228 "Signalling Flows for IP Multimedia Call Protocol based on SIP and SDP" kann neben einer detaillierten Aufstellung der Funktionen des Session Initiation Protocols (SIP) auch eine Auflistung der SIP-spezifischen Steuernachrichten SIS eingesehen werden.

Als nächstes wird durch die zweite Netzwerkeinheit NE2 diese erste Nachricht N1 anhand mindestens eines Analyseparameters AYP ausgewertet. Dies ist durch den Schritt S1 in Figur 1 gekennzeichnet. In dem Dokument 3GPP TS 23.218 "IP Multimedia Session Handling, IM Call Modes, Stage 2" werden SIP-Filter auf SIP-Ebene definiert. Allgemein kann die Analyse der SIP-Steuernachricht SIS anhand folgender Analyseparameter AYP durchgeführt werden:
- Nachrichtentyp der SIP-Steuernachricht SIS:
   das SIP-Protokoll definiert eine Vielzahl verschiedener Nachrichtentypen für eine SIP-Steuernachricht SIS, wie z.B. zum Registrieren einer Kommunikationseinheit in einer Multimediasitzung oder eine SIP-Steuernachricht, mit der lediglich eine Kommunikationseinheit über ein bestimmtes Ereignis informiert werden soll.
- Mindestens ein Nachrichtenparameter NP der SIP- Steuernachricht SIS:
   neben dem Nachrichtentyp kann die Auswertung einer SIP-Steuernachricht SIS in Abhängigkeit von mindestens einem Nachrichtenparameter NP durchgeführt werden. Ein Nachrichtenparameter NP repräsentiert einen Parameter oder ein Feld der SIP-Steuernachricht, wie z.B. eine IP-Adresse, eine Portnummer, die Nutzeridentität NID der Kommunikationseinheit KE, oder ein codiertes Datenfeld innerhalb der SIP- Steuernachricht SIS. Somit werden als Nachrichtenparameter NP alle möglichen Parameter bzw. Felder innerhalb einer SIP-Steuernachricht SIS verstanden, wie beispielsweise ein Längenangabefeld der SIP-Steuernachricht SIS.

Die Nutzeridentität NID der Kommunikationseinheit KE ist eine eindeutige Kennzeichnung z.B. für eine speziellen Applikation. Eine Kommunikationseinheit KE kann mehrere Nutzeridentitäten NID aufweisen, sodass z.B. die Nutzeridentität NID = "015" einer bestehenden IP-basierten Telephonieanwendung zugeordnet ist.

So zeigt ein bestimmter Analyseparameter AYP an, dass für alle SIP-Steuernachrichten SIS, die vom Nachrichtentyp "REGISTER" sind, ein Analyseergebnis erzeugt und dieses weitergeleitet werden soll. Trifft kein Analyseparameter AYP auf die zu analysierende SIP-Steuernachricht SIS zu, so wird die SIP-Steuernachricht SIS bspw. an eine Empfänger oder einen Absender weitervermittelt.

Für den Fall, dass mindestens ein Analyseparameter AYP auf die SIP-Steuernachricht SIS zutrifft, wird ein Analyseergebnis AYE gebildet. Das Analyseergebnis AYE kann dabei das Ergebnis der Analyse der SIP-Steuernachricht SIS anhand von einem oder mehreren Analyseparametern AYP umfassen. Das Analyseergebnis AYE weist bspw. folgende Struktur auf:
AYE = " Kommunikationseinheit: KE1;
Nachrichtentyp: REGISTER;
Zweite Portnummer PN2: 1713;
Zweite IP-Adresse IP2: 139.172.15.51"

Im Ausführungsbeispiel gemäß Figur 1 handelt es sich bei der ersten Nachricht N1 um eine SIP-Steuernachricht SIS vom Nachrichtentyp "REGISTER". In einem nächsten Schritt fordert die zweite Netzwerkeinheit NE2 mittels einer zweiten Nachricht N2 mindestens eine Filteranweisung FW von der Datenbank DB an. Vorzugsweise umfasst diese zweite Nachricht N2 auch das Analyseergebnis AYE und eine Angabe für die Kommunikationseinheit KE. Nach Empfang dieser zweiten Nachricht N2 generiert die Datenbank DB mindestens eine Filteranweisung FW, die gegebenenfalls mit einem oder mehreren Zugriffsparametern ZP ergänzt wird. Anhand des Analyseergebnisses AYE erkennt die Datenbank DB beispielsweise, welche Kommunikationseinheit für die Auslösung dieser zweiten Nachricht N2 verantwortlich ist, oder welcher Nachrichtentyp diese zweite Nachricht N2 initiiert hat. Somit können Analyseparameter AYP die Erstellung der Filteranweisung FW steuern. Beispielsweise verfügt die Datenbank DB über eine Liste mehrerer Filteranweisungen FW für die Kommunikationseinheit KE, die beispielsweise nach verschiedenen Nachrichtentypen oder Portnummern sortiert ist. Diese Liste mit Filteranweisungen FW kann von Zeit zu Zeit angepasst werden, beispielsweise in Abhängigkeit von einem Aufenthaltsort der Kommunikationseinheit KE1, von einer Netzauslastung des Mobilfunksystems MS oder auch von der Tageszeit. Im vorliegenden Ausführungsbeispiel soll durch eine Filteranweisung FW der Kommunikationseinheit KE der Zugriff auf eine Multimedia-Sitzung für 2 Stunden gewährt werden. Dazu generiert die Datenbank DB mehrere Filteranweisungen FW, die die erste und zweite IP-Adresse IP1, IP2 und die erste und zweite Portnummer PN1, PN2 umfasst, wobei diesen eine positive Zugriffszeitdauer PZD von 2 Stunden zugewiesen werden. Nach Erstellung der Filteranweisungen FW werden diese mittels einer dritten Nachricht N3 an die zweite Netzwerkeinheit NE2 übermittelt.

In einem nachfolgenden Schritt S2 kann eine Authentifizierung der Kommunikationseinheit KE erfolgen. Nach erfolgreicher Authentifizierung mittels einer "Registration Notification Prozedur" wird mit Hilfe einer vierten Nachricht N4 durch die zweite Netzwerkeinheit NE2 der Nutzerdatenbank HSS mitteilt, dass die Kommunikationseinheit KE durch diese registriert worden ist. Anschließend wird das sog. "User Profil", siehe 3GPP TS 23.218, von der Nutzerdatenbank HSS an die zweite Netzwerkeinheit NE2 mittels einer achten Nachricht N8 geschickt.

Nach Empfang der achten Nachricht N8 erstellt die zweite Netzwerkeinheit NE2 die Nutzungsinformation NI, die in diesem Beispiel mindestens eine Filteranweisung FW umfasst.

Des Weiteren sendet die zweite Netzwerkeinheit NE2 die Nutzungsinformation NI und eine Bestätigungsinformation "REG_OK", die die Registration der Kommunikationseinheit KE1 bestätigt, mittels einer fünften Nachricht N5 an die dritte Netzwerkeinheit NE3. Die Filteranweisungen FW und die Zugriffsparameter ZP können mit Hilfe der XML-Syntax dargestellt werden. Der Transport der Nutzungsinformation NI kann in einer spezifischen SIP-Nachricht MSN erfolgen, insbesondere in einem neuen SIP-Kopffeld (SIP-Header) oder in einem SIP-Nachrichtenkörper (SIP-Body) erfolgen, wie z.B. bei der fünften Nachricht N5.

Nach Empfang der fünften Nachricht N5 entfernt die dritte Netzwerkeinheit NE3 die Bestätigungsinformation "REG_OK" aus der fünften Nachricht N5 und übermittelt diese mit Hilfe einer sechsten Nachricht N6 an die erste Netzwerkeinheit NE1. Somit verfügt die erste Netzwerkeinheit NE1 über die Nutzungsinformation NI und ist damit in der Lage den nachfolgenden Nachrichtenverkehr der Kommunikationseinheit KE zu filtern. Ferner entfernt die dritte Netzwerkeinheit NE3 die Nutzungsinformation NI aus der fünften Nachricht N5 und leitet diese in Form einer siebten Nachricht N7 an die Kommunikationseinheit KE weiter. Die Kommunikationseinheit KE ist nach Empfang der siebten Nachricht N7 berechtigt im Folgenden Nachrichten, z.B. mit dem Datenserver DS, auszutauschen. Die Filterung von Nachrichten wird später anhand des Ausführungsbeispiels gemäß der Figur 2 gezeigt.

In einer möglichen Variante des vorliegenden Ausführungsbeispiels werden alle Filteranweisungen FW bzw. die Nutzungsinformation NI nicht durch die Datenbank DB, sondern durch die Nutzerdatenbank HSS und/oder die zweite Netzwerkeinheit NE2 und/oder einen Applikationssever AS generiert. Hierzu kann beispielsweise in die vierte Nachricht N4 das Analyseergebnis AYE integriert werden. Analog zu den vorigen Ausführungen zur Erstellung mindestens einer Filteranweisung FW durch die Datenbank DB erstellt nun die Nutzerdatenbank HSS mindestens eine Filteranweisung FW, die gegebenenfalls mit einem Zugriffsparameter ZP, ergänzt wird. Mindestens eine Filteranweisung FW wird mit Hilfe der achten Nachricht N8 an die zweite Netzwerkeinheit NE2 übertragen. Diese Variante ist besonders vorteilhaft, da zum einen die Datenbank DB zum Aufbau der Filteranweisungen FW nicht integriert werden muss, und zum anderen, dass durch Wegfall der zweiten und dritten Nachricht N2, N3 Übertragungsbandbreite eingespart werden kann.

Ferner können die zweite Netzwerkeinheit NE2, der Applikationsserver AS, die Nutzerdatenbank HSS und/oder die Datenbank DB eine bestehende Nutzungsinformation NI anpassen. Bspw. wird durch die Datenbank DB die Nutzungsinformation NI erstellt. Nachdem diese durch die zweite Netzwerkeinheit NE2 empfangen wurde, kann die zweite Netzwerkeinheit NE2 diese vor dem Weiterschicken anpassen bzw. verändern. Bspw. ist der zweiten Netzwerkeinheit NE2 ein aktueller Übertragungsengpass im Mobilfunkssystem MS bekannt. Zur Vermeidung von weiteren Übertragungsproblemen schränkt die zweite Netzwerkeinheit NE2 die übertragbaren und/oder empfangbaren Nachrichten mit Hilfe der in der Nutzungsnachricht NI enthaltenen Filteranweisung FW weiter ein. So wird beispielsweise eine zweite IP-Adresse IP2 mit einer positiven Zugriffshäufigkeit PZH versehen.

Mit Hilfe mindestens einer Filteranweisung FW können bei der Überwachung des Nachrichtenverkehrs zwischen der ersten Netzwerkeinheit NE1 und der Kommunikationseinheit KE tariffierungsrelevante Daten ermittelt werden, wie z.B. die übermittelte Nutzdatenmenge. Somit ist gewährleistet, dass der Nachrichtenverkehr, der aufgrund der SIP-Steuernachricht SIS ausgelöst wird, mit dieser SIP-Steuernachricht SIS assoziiert werden kann. Dies ermöglicht die situationsbezogene Tariffierung der Datenverbindung z.B. in Abhängigkeit des Services als auch des Ursprungs dieses Services. Da jedoch die Angabe beispielsweise einer zweiten IP-Adresse IP2 oder zweiten Portnummer PN2 nicht in jedem Fall ausreicht, um den Nachrichtenverkehr mit der SIP-Steuernachricht SIS eindeutig zu korrelieren, kann in einer Erweiterung des erfindungsgemäßen Verfahrens ein Identifikationsmerkmal ITK in jede Nachricht dieses Nachrichtenverkehrs eingefügt werden. Dieses Identifikationsmerkmal ITK wird beispielsweise durch die zweite Netzwerkeinheit NE2 erzeugt und mit Hilfe der Nutzungsinformation NI an die erste Netzwerkeinheit NE1 als auch an die Kommunikationseinheit KE übermittelt. Im Folgenden wird dieses Identifikationsmerkmal ITK in alle Nachrichten integriert, die aufgrund der SIP-Steuernachricht SIS generiert werden. Hiermit ist auch eine eindeutige Filterung des durch die SIP-Steuernachricht SIS verursachten Nachrichtenverkehrs möglich.

In Figur 2 ist ein weiteres Ausführungsbeispiel zu finden, bei dem eine SIP-Steuernachricht SIS von einem Presence Service PS an die Kommunikationseinheit KE übermittelt werden soll. Der Presence Service PS ist in 3GPP TR 24.847 "Presence Service based on SIP, Functional Models, Information Flows and Protocol Details" näher beschrieben.

Der Presence Service PS sendet zunächst eine elfte Nachricht N11 an die zweite Netzwerkeinheit NE2, um der Kommunikationseinheit KE einen Verweis auf ein Präsenzdokument zu übermitteln. Das Präsenzdokument beinhaltet beispielsweise eine Zeitungsseite. Dieser Verweis erfolgt hier durch Angabe einer Adresse mittels des sog. Content-Indirection-Verfahrens innerhalb der ersten Nachricht, siehe IETF "draft-ietf-sip-content-indirect-mech-03.txt", http:\\www.ietf.org. Die zweite Netzwerkeinheit NE2 wertet in einem Verarbeitungsschritt S11 die elfte Nachricht N11, die einer SIP-Steuernachricht SIS entspricht, anhand mindestens eines Analyseparameters AYP aus. Beispielsweise kann durch Setzen eines SIP-Filters in der zweiten Netzwerkeinheit NE2 auf den Presence Service PS und das Content-Indirection-Verfahren, z.B. als Bestandteil der sog. "Filter Criteria" in 3GPP TS 23.218 die zweite Netzwerkeinheit NE2 angewiesen werden, diese elfte Nachricht N11 an den speziellen Applikationsserver AS weiterzuleiten. Der Applikationsserver AS umfasst beispielsweise eine Recheneinheit mit einem Speichermodul. Der Application Server AS kann Applikationen, wie z.B. einen Presence Service, steuern.

Hierauf generiert die zweite Netzwerkeinheit NE2 das Analyse-ergebnis AYE und ein Identifizierungsmerkmal ITK, wobei das Identifikationsmerkmal ITK den durch diese SIP-Steuernachricht SIS ausgelösten Nachrichtenverkehr eindeutig identifiziert. In einer zwölften Nachricht N12 übermittelt die zweite Netzwerkeinheit NE2 die elfte Nachricht N11 mit zumindest dem Identifizierungsmerkmal ITK an den Applikationsserver AS. Ferner kann diese zwölfte Nachricht N12 auch das Analyseergebnis AYE und/oder einen Verweis auf die Kommunikationseinheit KE enthalten. Zum Transport des Identifikationsmerkmals ITK in der zwölften Nachricht N12 kann ein bereits existierendes oder ein neu zu definierendes SIP-Kopffeld verwendet werden.

Der Applikationsserver AS wertet die zwölfte Nachricht N12 aus und generiert mindestens eine Filteranweisung FW, die gegebenenfalls mit einem oder mehreren Zugriffsparametern ZP ergänzt wird. In einem zwölften Verarbeitungsschritt S12 erzeugt der Applikationsserver AS eine Nutzungsinformation NI, die neben mindestens einer Filteranweisung FW auch das eindeutige Identifikationsmerkmal ITK umfasst, und sendet anschließend dieses in Form einer dreizehnten Nachricht N13 an die dritte Netzwerkeinheit NE3. Die dritte Netzwerkeinheit NE3 leitet diese dreizehnte Nachricht N13 in Form einer vierzehnten Nachricht N14 an die erste Netzwerkeinheit NE1 weiter. Somit kennt die erste Netzwerkeinheit NE1 die Filteranweisungen FW und zusätzlich das Identifikationsmerkmal ITK. Da die Filteranweisungen FW und das Identifikationsmerkmal ITK aufgrund der SIP-Steuernachricht SIS generiert wird, ist dadurch eine eindeutige Zuordnung jeder Nachricht des durch die SIP-Steuernachricht SIS verursachten Nachrichtenverkehrs möglich.

Ferner übermittelt der Applikationsserver AS in einer fünfzehnten Nachricht N15 die Nachricht "NOTIFY" zusammen mit dem Identifizierungsmerkmal ITK an die zweite Netzwerkeinheit NE2, die diese fünfzehnte Nachricht N15 in Form einer sechzehnten Nachricht N16 an die dritte Netzwerkeinheit NE3 weiterleitet. Im Anschluss daran sendet die dritte Netzwerkeinheit NE3 die sechzehnte Nachricht N16 in Form einer siebzehnten Nachricht N17 zur Kommunikationseinheit KE. Ein Empfangsmittel der Kommunikationseinheit KE empfängt diese siebzehnte Nachricht N17 und durch ein Verarbeitungsmittel der Kommunikationseinheit KE wird die siebzehnte Nachricht N17 ausgewertet. Hierbei wird erkannt, dass es sich um eine Nachricht von Nachrichtentyp "NOTIFY", d.h. einer SIP-Notification, handelt, und zusätzlich, dass jede weitere Nachricht, die aufgrund dieser siebzehnten Nachricht N17 durch die Kommunikationseinheit KE verschickt wird, das Identifikationsmerkmal ITK umfassen muss.

Im Folgenden verschickt die Kommunikationseinheit KE eine achtzehnte Nachricht N18, wie z.B. eine Anforderungsnachricht (Englisch: "HTTP-Request GET") vom Nachrichtentyp "GET" unter Verwendung des Protokolls HTTP (HTTP - Hyper Text Transfer Protocol), an die erste Netzwerkeinheit NE1. Da diese achtzehnte Nachricht N18 in Zusammenhang mit der siebzehnten Nachricht N17 erstellt wird, muss die Kommunikationseinheit KE das Identifikationsmerkmal ITK in die achtzehnte Nachricht N18 einfügen. Die erste Netzwerkeinheit NE1 erkennt in der achtzehnten Nachricht N18 das Identifikationsmerkmal ITK und wendet daraufhin eine oder mehrere Filteranweisungen FW an, siehe Schritt S13 in Figur 2. Für den Fall, dass aufgrund einer Filteranweisung FW die Weiterleitung dieser achtzehnten Nachricht N18 zulässig ist, bzw. durch keine Filteranweisung FW die Weiterleitung blockiert wird, leitet die erste Netzwerkeinheit NE1 die achtzehnte Nachricht N18 in Form einer neunzehnten Nachricht N19 ohne das Identifikationsmerkmal ITK weiter. Sollte das Weiterleiten der achtzehnten Nachricht N18 nicht zulässig sein, so wird die Kommunikationseinheit KE mit Hilfe einer zwanzigsten Nachricht N20 informiert.

In einer alternativen Ausführungsform werden die Funktionalitäten der zweiten Netzwerkeinheit NE2, wie z.B. das Auswerten der SIP-Steuernachricht SIS, das Generieren des Identifikationsmerkmals ITK oder auch das Triggern des Applikationsservers AS, durch die dritte Netzwerkeinheit NE3 übernommen.

Zusätzlich oder alternativ kann die erste Kommunikationseinheit KE1 den Nachrichtenverkehr, wie z.B. die Nachrichten mit dem Identifikationsmerkmal ITK, in einer Protokolldatei zur späteren Auswertung protokollieren. Durch das erfindungsgemäße Verfahren wird es ermöglicht, die protokollierten Informationen der Protokolldatei, wie z.B. Datenvolumen der zweiten IP-Adresse IP2, mit der SIP-Signalisierungsnachricht SIS zu korrelieren.

In den Ausführungsbeispielen gemäß Figur 1 und 2 wurden die Filteranweisungen FW und gegebenenfalls die Zugriffsparameter ZP einmal erstellt und dienen im Folgenden zur Überwachung des Nachrichtenverkehrs. In einer möglichen vorteilhaften Erweiterung des erfindungsgemäßen Verfahrens können eine oder mehrere Filteranweisungen FW als auch die dazugehörigen Zugriffsparameter ZP dynamisch geändert werden. Beispielsweise ändert sich die Übertragungskapazität innerhalb des Mobilfunksystems MS. Um eine Überlastung des Mobilfunksystems MS zu vermeiden, wird der Zugriff der Kommunikationseinheit KE mit Hilfe einer zusätzlichen und/oder veränderten Filteranweisung FW eingeschränkt. Diese zusätzliche Filteranweisung FW wird bspw. durch die zweite Netzwerkeinheit NE2 generiert und mit Hilfe der dritten Ntetzwerkeinheit NE3 in Form einer Nutzungsinformation NI an die erste Netzwerkeinheit NE1 übermittelt. Nach Empfang dieser zusätzlichen Filteranweisung FW wird für den weiteren Nachrichtenverkehr auch diese zusätzliche Filteranweisung FW berücksichtigt. Alternativ kann auch ein neuer Satz von Filteranweisungen FW z.B. durch die zweite Netzwerkeinheit NE2 erstellt werden, die nach der Übermittlung an die erste Netzwerkeinheit NE1 den bestehenden Satz an Filteranweisungen FW mit den neuen Filzeranweisungen FW überschreibt.

Unter einem Mobilfunksystem MS ist beispielsweise eine Anordnung zu verstehen, die die Kommunikationseinheit KE, und die erste, zweite und dritte Netzwerkeinheit NE1, NE2, NE3 umfasst. Ein solches Mobilfunksystem MS ist beispielsweise ein Teil eines GSM-Mobilfunksystems (GSM - Global System for Mobile) oder eines UMTS-Mobilfunksystems (UMTS - Universal Mobile Telecommunications System).

Die erste Netzwerkeinheit NE1 verfügt über Mittel zum Überwachen eines Nachrichtenverkehrs zwischen der Kommunikationseinheit KE und der ersten Netzwerkeinheit ME eines Mobilfunksystems MS. Hierzu umfasst die erste Netzwerkeinheit eine Vorrichtung zum Senden als auch eine Vorrichtung zum Empfangen von Nachrichten. Zusätzlich beinhaltet die erste Netzwerkeinheit NE1 eine Verarbeitungseinheit zum Verarbeiten der zu empfangenden und zu sendenden Nachrichten, sowie zur Analyse dieser Nachrichten anhand von mindestens einer Nutzungsinformation NI gemäß dem erfindungsgemäßen Verfahren. Die Sende-, Empfangsvorrichtung und das Verarbeitungsmittel können über ein Verbindungsnetzwerk miteinander zum Austausch von Informationen verbunden sein.

Die zweite Netzwerkeinheit NE2 verfügt über Mittel zum Durchführen des erfindungsgemäßen Verfahrens. So umfasst diese ein Sende- und Empfangsmittel zum Versenden und Entgegennehmen von Nachrichten, sowie ein Verarbeitungsmittel zur Analyse von Nachrichten und zum Steuern der Verarbeitungsschritte gemäß dem erfindungsgemäßen Verfahren, insbesondere die Erstellung der Nutzungsinformation NI. Das Verarbeitungsmittel, das Sende- und Empfangsmittel sind über ein Verbindungsnetzwerk zum Austausch von Informationen miteinander verbunden.

## Patentansprüche

1. Verfahren zur Überwachung eines Nachrichtenverkehrs zwischen einer Kommunikationseinheit (KE) und einer ersten Netzwerkeinheit (NE1) eines Mobilfunksystems (MS), wobei dieser Nachrichtenverkehr durch eine SIP-Steuernachricht (SIS) ausgelöst wird, mit folgenden Schritten:
a) die SIP-Steuernachricht (SIS) wird durch eine zweite Netzwerkeinheit (NE2) anhand mindestens eines Analyseparameters (AYP) ausgewertet und daraus ein Analyseergebnis (AYE) erstellt;
b) mit Hilfe des Analyseergebnisses (AYE) wird eine Nutzungsinformation (NI) erzeugt und die Nutzungsinformation (NI) an die erste Netzwerkeinheit (NE1) übermittelt;
c) mit Hilfe der Nutzungsinformation (NI) wird von der ersten Netzwerkeinheit (NE1) der Nachrichtenverkehr zwischen der Kommunikationseinheit (KE) und der ersten Netzwerkeinheit (NE1) überwacht.

2. Verfahren nach Anspruch 1,
**dadurch gekennzeichnet,**
**dass** zum Erstellen des Analyseergebnisses (AYE) zumindest einer der folgenden Analyseparameter (AYP) in der SIP-Steuernachricht (SIS) ausgewertet wird:
- Nachrichtentyp der SIP-Steuernachricht (SIS);
- Mindestens ein Nachrichtenparameter (NP) der SIP-Steuernachricht (SIS), insbesondere
- Kommunikationseinheit (KE);
- Nutzeridentität (NID) der Kommunikationseinheit (KE).

3. Verfahren nach einem der vorhergehenden Ansprüche,
**dadurch gekennzeichnet,**
**dass** in die Nutzungsinformation (NI) zumindest eine der folgenden Filteranweisungen (FW) eingefügt wird:
- mindestens eine erste IP-Adresse (IP1) eines Absenders einer Nachricht;
- mindestens eine erste Port-Nummer (PN1) eines Absenders einer Nachricht;
- mindestens eine zweite IP-Adresse (IP2) einer Zieleinheit (ZE) einer Nachricht;
- mindestens eine zweite Port-Nummer (PN2) der Zieleinheit (ZE) einer Nachricht.

4. Verfahren nach Anspruch 3,
**dadurch gekennzeichet,**
dass mindestens eine Filteranweisung (FW) durch mindestens einen der folgenden zugriffsparameter (ZP) ergänzt wird:
- positive Zugriffsberechtigung (PZB) oder
- negative Zugriffsberechtigung (NZB);
- positive zugriffszeitdauer (PZD) oder
- negative Zugriffszeitdauer (NZD);
- positive Zugriffshäufigkeit (PZH) oder
- negative Zugriffshäufigkeit (NZH).

5. Verfahren nach Anspruch 3 oder 4,
**dadurch gekennzeichnet,**
**dass** die Filteranweisung (FW) unter Zuhilfenahme einer XML-Syntax erstellt wird.

6. Verfahren nach einem der Ansprüche 3 mit 5,
**dadurch gekennzeichnet,**
**dass** die Filteranweisung (FW) derart erstellt wird, dass die Erstellung mit Hilfe mindestens eines der Analyseparameter (AYP) gesteuert wird.

7. Verfahren nach einem der vorhergehenden Ansprüche,
**dadurch gekennzeichnet,**
**dass** die Nutzungsinformation (NI) durch eine Nutzerdatenbank (HSS), insbesondere einen Home Subscriber Server, erstellt und/oder angepasst wird.

8. Verfahren nach einem der vorhergehenden Ansprüche,
**dadurch gekennzeichnet,**
die Nutzungsinformation (NI) durch eine Datenbank (DB) erzeugt und/oder verändert wird.

9. Verfahren nach einem der vorhergehenden Ansprüche,
**dadurch gekennzeichnet,**
die Nutzungsinformation (N1) durch einen Applikationsserver (AS) generiert und/oder angepasst wird.

10. Verfahren nach einem der vorhergehenden Ansprüche,
**dadurch gekennzeichnet,**
**dass** Nutzungsinformation (NI) durch die zweite Netzwerkeinheit (NE2) erstellt und/oder verändert wird.

11. Verfahren nach einem der vorhergehenden Ansprüche,
**dadurch gekennzeichnet,**
**dass** die Nutzungsinformation (NI) durch ein Identifikationsmerkmal (ITK) erweitert wird.

12. Verfahren nach einem vorhergehenden Ansprüche,
**dadurch gekennzeichnete**
**dass** die Nutzungsinformation (N1) in einer spezifischen SIP-Nachricht (MSN) integriert wird.

13. Verfahren nach einem der vorhergehenden Ansprüche,
**dadurch gekennzeichnet,**
**dass** als Kommunikationseinheit (KE) ein User-Equipment (UE) verwendet wird.

14. Verfahren nach einem der vorhergehenden Ansprüche,
**dadurch gekennzeichnet,**
**dass** der Nachzichtenverkehr über ein IP Multimedia Subsystem (IMS) übertragen wird.

15. Netzwerkeinheit (NE1) für die Verwendung in einem Mobilfunksystem (MS) mit einer Kommunikationseinheit (KE), der Netzwerkeinheit (NE1) und einem zwischen der Kommunikationseinheit (KE) und der Netzwerkeinheit (NE1) stattfindenden Nachrichtenverkehr, wobei dieser Nachrichtenverkehr durch eine SIP-Steuernachricht (SIS) ausgelöst wird, wobei die Netzwerkeinheit (NE1) beinhaltet:
Mittel zum Empfangen einer Nutzungsinformation (NI), die mit Hilfe eines Analyseergebnisses (AYE) erzeugt wurde,
wobei das Analyseergebnis aus der Auswertung der SIP-Steuernachricht (SIS) anhand mindestens eines Analyseparameters (AYP) erstellt wurde; und
Mittel zum Überwachen des Nachrichtenverkehrs zwischen der Kommunikationseinheit (KE) und der Netzwerkeinheit (NE1) des Mobilfunksystems (MS) mit Hilfe der Nutzungsinformation (NI).

16. Netzwerkeinheit (NE1) nach Anspruch 15,
**dadurch gekennzeichnet,**
**dass** die Netzwerkeinheit (NE1) als Gateway-GPRS-Support-Node (GGSN) realisiert ist.

17. Netzwerkeinheit (NE1) nach einem der Ansprüche 15 oder 16,
**gekennzeichnet durch**
Mittel zum Verarbeiten zumindest einer der folgenden, in der Nutzungsinformation (NI) enthaltenen Filteranweisungen (FW) :
- mindestens eine erste IP-Adresse (IPI) eines Absenders einer Nachricht;
- mindestens eine erste Port-Nummer (PN1) eines Absenders einer Nachricht;
- mindestens eine zweite IP-Adresse (IP2) einer Zieleinheit (ZE) einer Nachricht;
- mindestens eine zweite Port-Nummer (PN2) der Zieleinheit (ZE) einer Nachricht.

18. Netzwerkeinheit (NE1) nach Anspruch 17,
**gekennzeichnet durch**
Mittel zum Verarbeiten zumindest eines der folgenden, die Filteranweisung (FW) ergänzenden Zugriffsparameter (ZP):
- positive Zugriffsberechtigung (PZB) oder
- negative Zugriffsberechtigung (NZB);
- positive zugriffszeitdauer (PZD) oder
- negative Zugriffszeitdauer (NZD);
- positive Zugriffshäufigkeit (PZH) oder
- negative Zugriffshäufigkeit (NZH).

19. Mobilfunksystem (MS) zum Durchführen des Verfahrens gemäß einem der Ansprüche 1 bis 14 mit einer ersten Netzwerkeinheit (NE1) gemäß einem der Ansprüche 15 bis 18 und einer zweiten Netzwerkeinheit (NE2).

20. Mobilfunksystem (MS) gemäß Anspruch 19,
**dadurch gekennzeichnet,**
**dass** als Ausführung der zweiten Netzwerkeinheit (NE2) ein Rufstatuskontrollmodul, insbesondere ein Serving-Call State Controll Function Module (S-CSCF), verwendet ist.

## Claims

1. Method for monitoring message traffic between a communication unit (KE) and a first network unit (NE1) of a mobile radio system (MS), with this message traffic being initiated by an SIP control message (SIS), with the following steps:
a) The SIP control message (SIS) is analyzed by a second network unit (NE2) on the basis of at least one analysis parameter (AYP) and establishes an analysis result (AYE) from this;
b) With the aid of the analysis result (AYE) utilization information (NI) is created and the utilization information (NI) is transferred to the first network unit (NE1);
c) With the aid of the utilization information (NI) the message traffic between the communication unit (KE) and the first network unit (NE1) is monitored by the first network unit (NE1).

2. Method according to claim 1,
**characterised in that**,
to create the analysis result (AYE) at least one of the following analysis parameters (AYP) is evaluated in the SIP control message (SIS):
- Message type of the SIP control message (SIS);
- At least one message parameter (NP) of the SIP control message (SIS), especially
- Communication unit (KE);
- User identity (NID) of the communication unit (KE).

3. Method according to one of the preceding claims,
**characterised in that**,
at least one of the following filtering instructions (FW) is inserted into the utilization information (NI):
- at least a first IP address (IP1) of a sender of a message;
- at least a first port number (PN1) of a sender of a message;
- at least a second IP address (IP2) of a destination unit (ZE) of a message;
- at least a second port number (PN2) of the destination unit (ZE) of a message.

4. Method according to claim 3,
**characterised in that**
at least one filter instruction (FW) is supplemented by at least one of the following access parameters (2P):
- positive access authorization (PZB) or
- negative access authorization (NZB);
- positive access time (PZD) or
- negative access time (NZD);
- positive access frequency (PZH) or
- negative access frequency (PZH).

5. Method according to claim 3 or 4,
**characterised in that**
the filter instruction (FW) is established with the aid of an XML syntax.

6. Method according to one of the claims 3 to 5,
**characterised in that**
the filter instruction (FW) is established such that the creation is controlled with the aid of at least one of the analysis parameters (AYP).

7. Method according to one of the preceding claims,
**characterised in that**
the utilization information (NI) is established and adapted by a user database (HSS), especially a Home Subscriber Server.

8. Method according to one of the preceding claims,
**characterised in that**
the utilization information (NI) is created and/or modified by a database (DB).

9. Method according to one of the preceding claims,
**characterised in that**
the utilization information (NI) is generated and/or adapted by an application server (AS).

10. Method according to one of the preceding claims,
**characterised in that**
utilization information (NI) is established or modified by the second network unit (NE2).

11. Method according to one of the preceding claims,
**characterised in that**
the utilization information (NI) is expanded by an identification characteristic (ITK).

12. Method according to one of the preceding claims,
**characterised in that**
the utilization information (NI) is integrated into a specific SIP message (MSN).

13. Method according to one of the preceding claims,
**characterised in that**
User Equipment (UE) is used as the communication unit (KE).

14. Method according to one of the preceding claims,
**characterised in that**
the message traffic is transmitted over an IP Multimedia Subsystem (IMS).

15. Network unit (NE1) for use in a mobile radio system (MS) with a communication unit (KE), the network unit (NE1) and message traffic taking place between the communication unit (KE) and the network unit (NE1), with this network traffic being initiated by the SIP control message (SIS), with the network unit (NE1) containing:
Means for receiving utilization information (NI) which was generated with the aid of an analysis result (AYE), with the analysis result having been created from the evaluation of the SIP control message (SIS) on the basis of at least one analysis parameter (AYP); and
Means for monitoring the message traffic between the communication unit (KE) and the network unit (NE1) of the mobile radio system (MS) with the aid of the utilization information (NI).

16. Network unit (NE1) according to claim 15,
**characterised in that**,
the first network unit (NE1) is implemented as a Gateway GPRS Support Node (GGSN).

17. Network unit (NE1) according to one of claims 15 or 16, **characterised by**
Means for processing at least one of the following filtering instructions (FW) contained in the utilization information:
- at least a first IP address (IP1) of a sender of a message;
- at least a first port number (PN1) of a sender of a message;
- at least a second IP address (IP2) of a destination unit (ZE) of a message;
- at least a second port number (PN2) of the destination unit (ZE) of a message.

18. Network unit (NE1) according to claim 17,
**characterised by**
means for processing at least one of the following access parameters (ZP) supplementing the filtering instructions (FW):
- positive access authorization (PZB) or
- negative access authorization (NZB);
- positive access time (PZD) or
- negative access time (NZD);
- positive access frequency (PZH) or
- negative access frequency (NZH).

19. Mobile radio system (MS) for carrying out the method according to one of claims 1 to 14 with a first network unit (NE1) according to one of claims 15 to 18 and a second network unit (NE2).

20. Mobile radio system (MS) according to claim 19.
**characterised in that**
a call state control module, especially a Serving-Call State Control Function Module (S-CSCF) is used as the embodiment of the second network unit (NE2).

## Revendications

1. Procédé pour surveiller un trafic de messages entre une unité de communication (KE) et une première unité de réseau (NE1) d'un système radio mobile (MS), ce trafic de messages étant déclenché par un message de commande SIP (SIS), comportant les étapes suivantes :
a) le message de commande SIP (SIS) est évalué par une deuxième unité de réseau (NE2) à l'aide d'au moins un paramètre d'analyse (AYP) et un résultat d'analyse (AYE) est établi sur cette base ;
b) à l'aide du résultat d'analyse (AYE), une information d'utilisation (NI) est créée et l'information d'utilisation (NI) est transmise à la première unité de réseau (NE1) ;
c) à l'aide de l'information d'utilisation (NI), le trafic de messages entre l'unité de communication (KE) et la première unité de réseau (NE1) est surveillé par la première unité de réseau (NE1).

2. Procédé selon la revendication 1, **caractérisé en ce qu'**est évalué, pour établir le résultat d'analyse (AYE), au moins l'un des paramètres d'analyse (AYP) suivants dans le message de commande SIP (SIS) :
- le type de message du message de commande SIP (SIS) ;
- au moins un paramètre de message (NP) du message de commande SIP (SIS), et plus particulièrement :
• l'unité de communication (KE) ;
• l'identité de l'utilisateur (NID) de l'unité de communication (KE).

3. Procédé selon l'une des revendications précédentes, **caractérisé en ce qu'**est insérée dans l'information d'utilisation (NI) au moins l'une des instructions de filtrage (FW) suivantes :
- au moins une première adresse IP (IP1) d'un expéditeur d'un message ;
- au moins un premier numéro de port (PN1) d'un expéditeur d'un message ;
- au moins une deuxième adresse IP (IP2) d'une unité de destination (ZE) d'un message ;
- au moins un deuxième numéro de port (PN2) de l'unité de destination (ZE) d'un message.

4. Procédé selon la revendication 3, **caractérisé en ce qu'**au moins une instruction de filtrage (FW) est complétée par au moins l'un des paramètres d'accès (ZP) suivantes :
- autorisation d'accès positive (PZB) ou
- autorisation d'accès négative (NZB) ;
- durée de temps d'accès positive (PZD) ou
- durée de temps d'accès négative (NID)
- fréquence d'accès positive (PZH) ou
- fréquence d'accès négative (NZH).

5. Procédé selon la revendication 3 ou 4, **caractérisé en ce que** l'instruction de filtrage (FW) est créée à l'aide d'une syntaxe XML.

6. Procédé selon l'une des revendications 3 avec 5, **caractérisé en ce que** l'instruction de filtrage (FW) est créée de manière telle que sa création est commandée à l'aide de l'un au moins des paramètres d'analyse (AYP).

7. Procédé selon l'une des revendications précédentes, **caractérisé en ce que** l'information d'utilisation (NI) est créée et/ou adaptée par une base de données d'utilisateurs (HSS), et plus particulièrement par un serveur « Home Subscriber Server ».

8. Procédé selon l'une des revendications précédentes, **caractérisé en ce que** l'information d'utilisation (NI) est générée et/ou modifiée par une base de données (DB).

9. Procédé selon l'une des revendications précédentes, **caractérisé en ce que** l'information d'utilisation (NI) est générée et/ou adaptée par un serveur d'application (AS).

10. Procédé selon l'une des revendications précédentes, **caractérisé en ce que** l'information d'utilisation (NI) est générée et/ou modifiée par la deuxième unité de réseau (NE2).

11. Procédé selon l'une des revendications précédentes, **caractérisé en ce que** l'information d'utilisation (NI) est élargie par une caractéristique d'identification (ITK).

12. Procédé selon l'une des revendications précédentes, **caractérisé en ce que** l'information d'utilisation (NI) est intégrée dans un message SIP spécifique (MSN).

13. Procédé selon l'une des revendications précédentes, **caractérisé en ce qu'**est utilisé, en tant qu'unité de communication (KE), un équipement d'usager (UE).

14. Procédé selon l'une des revendications précédentes, **caractérisé en ce que** le trafic de messages est transmis via un sous-système multimédia IP (IMS).

15. Unité de réseau (NE1) pour utilisation dans un système radio mobile (MS) comprenant une unité de communication (KE), l'unité de réseau (NE1) et un trafic de messages qui a lieu entre l'unité de communication (KE) et l'unité de réseau (NE1), ce trafic de messages étant déclenché par un message de commande SIP (SIS), l'unité de réseau (NE1) comprenant :
- des moyens pour recevoir une information d'utilisation (NI) qui a été générée à l'aide d'un résultat d'analyse (AYE), le résultat d'analyse ayant été établi sur la base de l'évaluation du message de commande SIP (SIS) à l'aide d'au moins un paramètre d'analyse (AYP) ; et
- des moyens pour surveiller le trafic de messages entre l'unité de communication (KE) et l'unité de réseau (NE1) du système radio mobile (MS) à l'aide de l'information d'utilisation (NI).

16. Unité de réseau (NE1) selon la revendication 15, **caractérisée en ce que** l'unité de réseau (NE1) est réalisée comme un noeud de support GPRS de passerelle (GGSN).

17. Unité de réseau (NE1) selon l'une des revendications 15 ou 16, **caractérisée par** des moyens pour traiter au moins l'une des instructions de filtrage (FW) suivantes contenues dans l'information d'utilisation (NI) :
- au moins une première adresse IP (IP1) d'un expéditeur d'un message ;
- au moins un premier numéro de port (PN1) d'un expéditeur d'un message ;
- au moins une deuxième adresse IP (IP2) d'une unité de destination (ZE) d'un message ;
- au moins un deuxième numéro de port (PN2) de l'unité de destination (ZE) d'un message.

18. Unité de réseau (NE1) selon la revendication 17, **caractérisée par** des moyens pour traiter au moins l'un des paramètres d'accès (ZP) suivants qui complètent l'instruction de filtrage (FW) :
- autorisation d'accès positive (PZB) ou
- autorisation d'accès négative (NZB) ;
- durée de temps d'accès positive (PZD) ou
- durée de temps d'accès négative (NID)
- fréquence d'accès positive (PZH) ou
- fréquence d'accès négative (NZH).

19. Système radio mobile (MS) pour exécuter le procédé selon l'une des revendications 1 à 14, avec une première unité de réseau (NE1) selon l'une des revendications 15 à 18 et une deuxième unité de réseau (NE2).

20. Système radio mobile (MS) selon la revendication 19, **caractérisé en ce qu'**est utilisé, en tant que réalisation de la deuxième unité de réseau (NE2), un module de contrôle de statut d'appel, et plus particulièrement un module « Serving-Call State Control Function Module » (S-CSCF).
